# DEMANDE DE BREVET EUROPEEN

(11) **EP 0 540 081 A1**
(43) Date de publication de la demande: **05.05.1993**
(21) Numéro de dépôt: 92203165.3
(22) Date de dépôt: 15.10.1992
(51) Int. Cl.: H04Q 7/04, H04B 7/26

(54) **Système de transmission d'information selon un multiplex temporel**

(30) Priorité: 23.10.1991 FR 9113084
(71) Demandeur: TRT TELECOMMUNICATIONS RADIOELECTRIQUES ET TELEPHONIQUES, 75013 Paris (FR); Philips Electronics N.V., 5621 BA Eindhoven (NL)
(72) Inventeur: Makowski, Pierre, F-75008 Paris (FR)
(74) Mandataire: Chaffraix, Jean

(57) **Abrégé**

Ce système de transmission d'informations comporte une pluralité de dispositifs d'abonné. Il est prévu au niveau des dispositifs d'abonné, un organe de cumul (65) pour emmagasiner les messages avant qu'un canal de message ne soit attribué et pour transmettre le message accumulé dans un canal de message dès qu'il est attribué.

## Description

La présente invention concerne un système de transmission d'informations selon un multiplex temporel composé au moins de canaux temporels de message utilisés pour la transmission de messages entre des dispositifs d'abonné.

Un tel système trouve d'importantes applications notamment lorsque les liaisons s'effectuent par voie radioélectrique et plus particulièrement lorsqu'il est utilisé comme un système privé (par opposition aux systèmes publics) où les ressources radioélectriques (canaux fréquentiels à bandes passantes réduites) sont distribuées de façon parcimonieuse.

Un problème qui se pose alors est d'exploiter au maximum les ressources attribuées.

Une des causes de cette mauvaise exploitation est la perte de temps qui survient entre la demande d'allocation d'un canal temporel de transmission de message et sa disponibilité. C'est notamment le cas où la communication est en alternat, où une ressource temporelle est demandée à chaque appui de la pédale d'alternat. Ce temps augmente la durée de la communication entre dispositifs d'abonnés et rend moins disponibles les ressources temporelles.

La présente invention propose un système du genre mentionné dans le préambule, qui supprime dans une large mesure cette perte de temps.

Pour cela, il est prévu au niveau des dispositifs d'abonné, un organe de cumul pour emmagasiner le message avant qu'un canal de message ne soit attribué et pour transmettre le message accumulé, dans le canal de message dès qu'il est attribué.

Il est à noter cependant que le brevet US-4 745 599 utilise aussi un organe de cumul pour la transmission de données. Mais ce brevet concerne la transmission de données par paquets, il permet une retransmission sélective des sous-paquets arrivés à destination erronés, ce qui implique une commande plus compliquée et de ce fait ne correspond pas au problème exposé ci-dessus. Il n'est pas question de répéter deux fois le même message dans le système de l'invention.

La description suivante accompagnée des dessins ci-annexés, le tout donné à titre d'exemple non limitatif fera bien comprendre comment l'invention peut être réalisée.

La figure 1 montre un schéma du système de transmission.

La figure 2 représente schématiquement l'organisation des multiplex temporels.

La figure 3 représente le schéma d'une station de rattachement de dispositif d'abonné.

La figure 4 explicite le protocole utilisé pour l'échange d'échantillons de message.

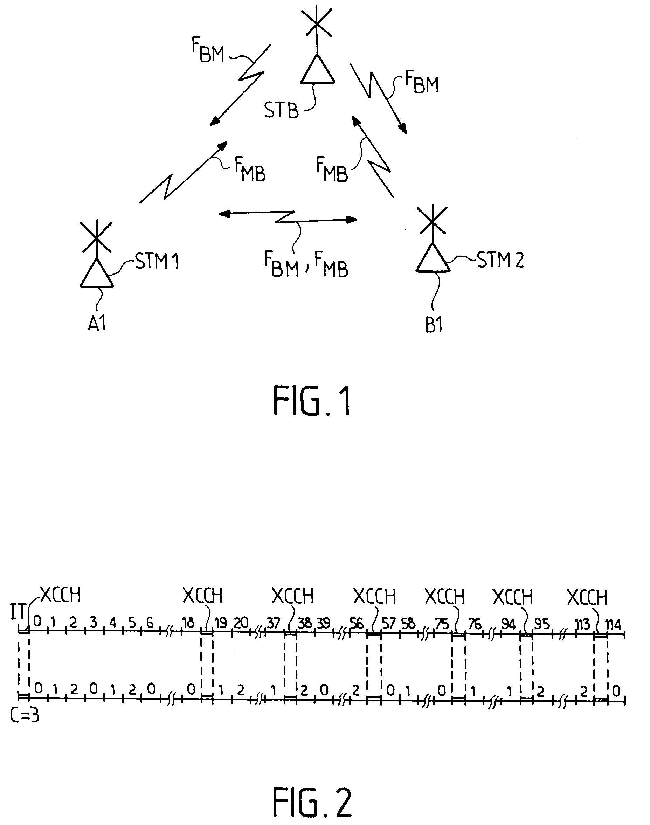

A la figure 1, on a représenté un système conforme à l'invention. Ce système est formé d'un ensemble de stations d'émission-réception STB, STM1 et STM2. Il va de soi que le nombre des stations peut être quelconque. STB est une station d'émission-réception de base, STM1 et STM2 sont des stations satellites, c'est-à-dire gérées par la station de base. En pratique la station de base est un poste fixe tandis que les stations STM1 et STM2 sont des stations portables ou embarquées dans des mobiles. A la station mobile STM1 est rattaché un dispositif d'abonné A1 et à la station mobile STM2 un dispositif d'abonné B1. Les stations communiquent entre elles par des liaisons radioélectriques qui utilisent deux canaux fréquentiels F_{BM} et F_{MB}.

En général le canal F_{BM} est emprunté par les communications allant de la base STB vers les mobiles STM1 et STM2 et le canal F_{MB} par les communications allant des stations mobiles vers la base. Les communications établies sur ces canaux fréquentiels sont organisées selon un multiplex temporel du type TDMA.

La figure 2 montre d'une manière très schématique l'organisation de ce multiplex. Cette organisation dérive de celle qui a été décrite dans la demande de brevet FR-90 12 416 déposée le 9 octobre 1990 au nom de la demanderesse. Pour des raisons de simplification on a représenté un multiplex comportant 3 canaux temporels formés d'intervalles de temps numérotés de 0 à 2 : parmi ces intervalles sont insérés des intervalles de temps XCCH réservés à la gestion du système. Ces intervalles sont placés alors entre les intervalles de temps IT 18 et 19, 37 et 38, 56 et 57, et... tandis que :
le canal temporel 0 correspond aux intervalles IT 0, 3, 6, ..., 18,
le canal 1 aux intervalles 1, 4, 7, ..., 19,
et le canal 2 aux intervalles 2, 5, 8, ..., 20.

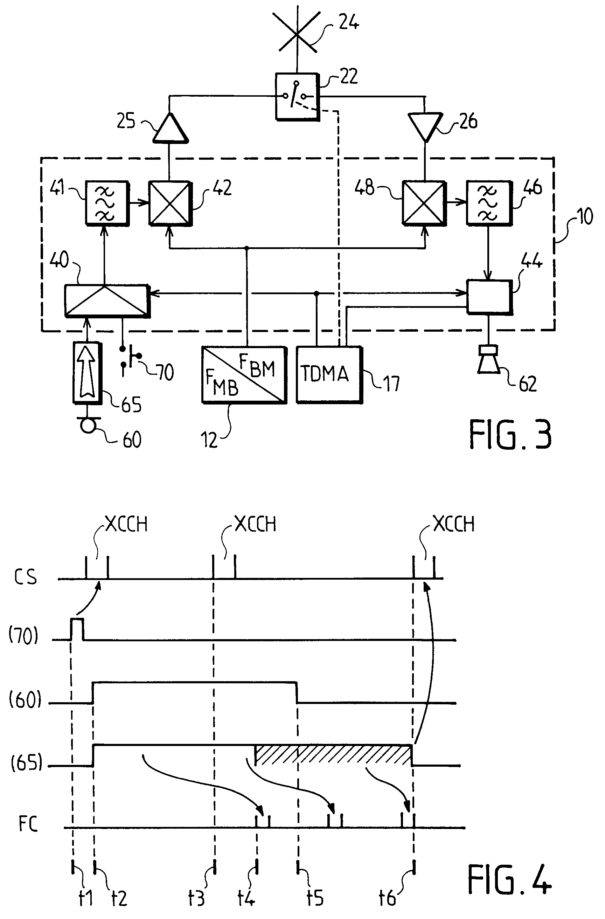

La figure 3 montre le schéma des stations mobiles STM1 et STM2 de structure identique.

Chaque station est composée d'un ensemble d'émission-réception 10 piloté par un couple d'oscillateurs de référence 12 oscillant respectivement aux fréquences F_{MB} et F_{BM}. Cet ensemble s'adapte à une trame TDMA au moyen d'un gestionnaire de trames 17. Un commutateur de duplexage 22 commandé par le gestionnaire 17 permet, sur une même antenne 24, à la fois d'émettre sur une fréquence F_{MB} et de recevoir sur une fréquence F_{BM}, différente ou non de F_{MB}. A ce commutateur 22 sont connectés un amplificateur d'émission 25 et un amplificateur de réception 26.

L'ensemble 10 est formé d'une partie émission 40 coopérant avec un filtre 41, centré sur une fréquence intermédiaire FI, et un modulateur 42. Le modulateur 42 centre sur la fréquence porteuse F_{MB} les informations fournies par la partie 40. La partie 40 d'une part arrange les informations à transmettre selon les commandes établies par le gestionnaire 17, et d'autre part module les informations en phase, fréquence ou amplitude sur une fréquence intermédiaire FI. Ce gestionnaire 17 permet aussi de récupérer les différentes informations contenues dans la trame TDMA reçue par un ensemble de réception 44. L'entrée de cet ensemble est reliée à la sortie d'un filtre 46, centré sur la fréquence FI, connecté à la sortie d'un démodulateur 48. Ce démodulateur 48 reçoit les signaux de l'amplificateur 26 et ceux fournis à la fréquence F_{BM}. La référence 60 indique le microphone de l'abonné et la référence 62 son écouteur. L'information de parole considérée comme un message est préalablement codée sous forme numérique, puis est transmise dans l'un des intervalles de temps de la trame transmise par la porteuse F_{MB}, cet intervalle étant affecté par le gestionnaire 17. De même, les informations de parole provenant d'un abonné lointain, transmises dans l'un des intervalles de temps de la trame transmise par F_{BM} sont restituées à l'écouteur 62, après décodage. En outre le gestionnaire 17 agit pour que tous les XCCH puissent être reçus. Ce qui permet une bonne gestion du système.

Conformément à l'invention, il est prévu au niveau du dispositif d'abonné formé notamment du micro 60 et de l'écouteur 62 un organe de cumul 65 pour emmagasiner le message constitué par des échantillons de parole avant qu'un canal temporel de message ne soit attribué et pour fournir le message ainsi accumulé au canal de message temporel attribué.

Selon un mode d'exécution préféré cette demande de canal est effectuée par le demandeur par l'appui de la pédale 70 (faisant aussi partie du dispositif d'abonné). Cet appui, détecté, est transmis dans un canal temporel de service formé par un intervalle de temps XCCH pour que l'attribution s'effectue par l'intermédiaire de la station centrale de base STB.

Le fonctionnement du système conforme à l'invention est expliqué à la figure 4. A l'instant t1, l'abonné demandeur appuie sur sa pédale d'alternat 70 pour une conversation, ceci est transmis dans un intervalle de temps XCCH du canal de service CS vers la station centrale. L'abonné peut parler immédiatement sans attendre l'acceptation de la base STB, les échantillons de parole numérisés étant stockés (dès le temps t2) dans l'organe de cumul 65, constitué, par exemple, par une mémoire de type FIFO (mémoire dont la première donnée entrée est celle qui sort la première). Puis à l'instant t3 le canal est attribué, son numéro est transmis au gestionnaire 17 dans un intervale de temps XCCH du canal de service. Puis à l'instant t4 où surgit l'intervalle de temps affecté au canal attribué, les échantillons emmagasinés sont déversés dans ce canal au rythme de ce canal et la mémoire 65 commence à se vider, ce qui est indiqué par une zone hachurée. Puis à l'instant t5 l'abonné cesse de parler et dès que la mémoire 65 est vidée, à l'instant t6 par la transmission d'échantillons effectuée dans les tranches de temps (représenté à la ligne FC de la figure 4), la ressource est libérée ; le vidage de la mémoire 65 est signalé à la station centrale dans un intervalle XCCH ; le canal peut être utilisé pour une autre conversation.

## Revendications

1. Système de transmission d'informations selon un multiplex temporel composé au moins de canaux temporels de message utilisés pour la transmission de messages entre des dispositifs d'abonné, caractérisé en ce qu'il est prévu au niveau des dispositifs d'abonné, un organe de cumul pour emmagasiner les messages avant qu'un canal de message ne soit attribué et pour transmettre le message accumulé dans un canal de message dès qu'il est attribué.

2. Système de transmission d'informations selon la revendication 1, formé d'au moins une station centrale et d'une pluralité de stations satellites auxquelles sont rattachés les dispositifs d'abonnés et pour lequel le multiplex temporel est composé en outre de canaux temporels de service, caractérisé en ce qu'un canal de service est utilisé pour la demande d'attribution de canaux de message effectuée par un dispositif d'abonné auprès de la station centrale et pour son attribution effective.

3. Système de transmission selon la revendication 1 ou 2 dans lequel le dispositif d'abonné est muni d'une pédale d'alternat pour définir l'émission-réception de l'abonné, caractérisé en ce que la demande d'attribution de canal de message est effectuée au moyen de la pédale d'alternat.

4. Dispositif d'abonné convenant à un système de transmission selon l'une des revendications 1 à 3, caractérisé en ce qu'il comporte l'organe de cumul pour emmagasiner les messages avant qu'un canal de message ne soit attribué et pour transmettre le message accumulé dans un canal de message dès qu'il est attribué.

5. Dispositif d'abonné selon la revendication 4 convenant à un système de transmission selon l'une des revendications 1 à 3, caractérisé en ce qu'il est muni d'une pédale d'alternat pour définir l'émission-réception de l'abonné, et en ce que la demande d'attribution de canal de message est effectuée au moyen de cette pédale d'alternat.
